# EUROPEAN PATENT SPECIFICATION

(11) **EP 1 423 290 B1**
(45) Date of publication and mention of the grant of the patent: **10.01.2007**
(21) Application number: 02755057.3
(22) Date of filing: 03.09.2002
(51) Int. Cl.: B60K 37/06

(54) **APPARATUS FOR USING AUXILIARY CONTROL DEVICES OF A VEHICLE**
GERÄT ZUR VERWENDUNG VON HILFSSTEUERVORRICHTUNGEN EINES FAHRZEUGS
APPAREIL PERMETTANT D'UTILISER DES DISPOSITIFS DE COMMANDE SECONDAIRES D'UN VEHICULE

(30) Priority: 04.09.2001 FI 20011753
(43) Date of publication of application: 02.06.2004
(73) Proprietor: Etelä-Suomen Autotalo OY, 15100 Lahti (FI)
(72) Inventor: LAUKKANEN, Mikko, FI-15140 LAHTI (FI)
(74) Representative: Hakola, Unto Tapani
(86) International application number: PCT/FI2002/000708
(87) International publication number: WO 2003/024734

(56) References cited:
- GB-A- 2 274 149
- JP-A- 10 089 104
- US-A- 523 592
- US-A- 4 476 954
- US-A- 5 022 283
- US-A- 5 603 674
- US-A- 6 161 449

## Description

The invention relates to an apparatus for using auxiliary control devices of a vehicle according to the preamble of the appended independent claim 1.

Earlier Finnish patent applications No. 20001987 and No. 20010443 by the applicant, which were not yet public on the date of filing of the present application, disclose a control device to be installed in a vehicle, said control device enabling the use of the original pedal control devices of the vehicle by means of a separate actuator intended for the driver. Typically, said control device is installed in a car equipped with automatic transmission, and in an advantageous embodiment of the control device, the actuator is a hand-operated handle. By means of this handle, the driver can exert a force on the brake and accelerator pedals of the vehicle by pushing the handle forward and pulling the handle backward, respectively. Consequently, by means of the aforementioned control device, it is also possible for persons with significantly impaired lower limb capacity, or totally lacking said limbs or their capacity, to drive a vehicle equipped with automatic transmission and normal foot pedals. Thus, thanks to the above-mentioned control device, a driver with restrictive mobility can thus operate the accelerator and the brakes of the vehicle by one hand, wherein the other hand is left free to steer the vehicle by using the steering wheel.

However, when driving a vehicle in traffic, situations come up continually in practice, in which the driver must, in addition to using the steering wheel, the accelerator and the brakes, simultaneously with these primary driving controls of the vehicle use also other, so-called secondary driving controls of the vehicle. Of these auxiliary control devices, the most important ones, which are used relatively frequently during normal driving, include the operating switches of, for example, the flashing traffic indicators, the dipped and high-beam headlights, as well as the windscreen wipers/washer. The operating switches of said auxiliary control devices are, in modern automobiles, normally placed in lever switches fixed to the steering column underneath the steering wheel, so that they would be as easy as possible to operate during driving.

Although the lever switches are placed close to the steering wheel, which arrangement is advantageous as such, they are still relatively difficult to use in practice by a driver who, because of restricted mobility or for another reason, must drive the automobile for example by means of a manual control device.

Consequently, solutions are known from prior art to reduce problems of the above-described kind, related to using the auxiliary control devices of a vehicle, in situations in which the driver's capabilities are restricted in some way, thereby impairing the smooth use of normal lever switches or panel switches in a driving situation.

One simple way known from prior art is to use various mechanical extension arms or auxiliary levers to facilitate the use of the original lever or panel switches of the vehicle.

US patent 5,022,283 presents a solution based on mechanical levers, by means of which the original lever switch of the flashing traffic indicators, placed on the left hand side of the steering wheel in the vehicle, can be used from the right hand side of the steering wheel, that is, by the driver's right hand. However, any kinds of stiff levers or bars installed in front of the driver increase the driver's risk of injury significantly in a collision situation, and they may hamper the functioning of the safety mechanisms installed in the vehicle itself, such as the functioning of the steering column designed to collapse at a collision.

Another method which is commonly known from prior art for using electrically operated secondary driving controls and auxiliary devices of the vehicle is to couple them directly to the electrical systems of the vehicle itself and to transfer the functions operated by the original operating switches to be controlled by such parallel operating switches which are placed better within reach for the driver with restricted mobility.

Patent publication GB 2274149A presents a solution, in which the operating switch used for the flashing traffic indicators is a turnable electrical switch which is placed in the handle for operating the mechanical manual control device and which is connected by an electrical conductor to the electrical system for operating the flashing traffic indicators of the vehicle. Patent publication DE 4437024A1, in turn, discloses an apparatus, in which auxiliary control devices of a vehicle, such as the flashing traffic indicators, the switch for the dipped and high-beam headlights, the windscreen wipers, and the horn, are controlled by means of a remote control device fixed on the rim of the steering wheel.

In practice, however, the above-mentioned and also other solutions of prior art, which are directly coupled to the electrical systems of the vehicle itself, involve the major problem that it is necessary to interfere with the functions and structures of the electrical systems of the vehicle itself. For similar reasons, it is also difficult to remove the devices and to transfer them from one vehicle to another.

Furthermore, US patent 5,023,592 discloses an apparatus according to the preamble of claim 1 by means of which the original lever switch of the flashing traffic indicators can be operated when turning the vehicle.

It is an aim of the present invention to disclose an apparatus by which problems involved in the above solutions of prior art can be avoided to improve the usability of the auxiliary control devices of the vehicle in a situation in which the abilities and/or possibilities of the driver to use the normal lever switches of the vehicle with ease in a driving situation are, for any reason, restricted. This is the case when the driver has restricted mobility of, for example, the lower limbs, wherein his/her one hand is engaged to use for example a manual control device. On the other hand, the driver may be capable of using the brake and the accelerator of the vehicle normally with his/her feet, but he/she only has one working hand available for steering the vehicle and for the auxiliary control devices. Furthermore, the capacity of the driver may be restricted because of rheumatoid arthritis, dystrophy or another disease or for another reason in such a way that he/she cannot exert a sufficient force to use the original auxiliary control devices of the vehicle.

It is thus an aim of the invention to present a solution by which the use of the auxiliary control devices of the vehicle can be made as easy, natural and safe as possible for the driver in different driving situations, in spite of the driver's possible restrictions of capacity. Furthermore, it is a particular aim of the invention to provide an apparatus which can be easily and quickly installed in various vehicles and which can, if necessary, also be removed from the vehicle easily and without leaving marks, and which does not, when installed in the vehicle, prevent the normal use of the original auxiliary control devices.

To attain these purposes, the apparatus according to the invention is primarily characterized in what will be presented in the characterizing part of the independent claim 1.

The invention is based on the idea that one or more original auxiliary control devices of the vehicle, that is, original lever switches, are used mechanically by means of one or more electrical actuators in such a way that the driver controls the operation of said actuators by means of one or more control means arranged within his/her reach. According to the invention, the driver can use said control means to control said electrical actuators to make mechanical movements of operation in a way corresponding to their normal manual operation. Consequently, the apparatus according to the invention acts as a kind of electrical robot which is controlled by the driver and which mechanically manipulates the original auxiliary control devices of the vehicle for him/her.

In an advantageous embodiment of the invention, the apparatus comprises one or more control units for the intelligent control of the electrical actuator/actuators. A single control unit is arranged to receive one or more control signals from one or more control means and, on the basis of the signals, further to control the movement of one or more electrical actuators in a predetermined way. This makes it possible that the apparatus according to the invention can be programmed to execute, as a result of a single command from the control means, for example a single pressing of a given push-button switch, not one movement but complete series of actions. The apparatus can be programmed to switch on, for example by a short single pressing of a push-button switch, the flashing traffic indicator of the vehicle for some time by turning the lever switch, and after a suitable predetermined delay time, to switch off the flashing traffic indicator automatically by turning the lever switch in the opposite direction. This function is useful, for example, in a situation of passing.

According to the invention, the movements of one or more actuators to operate the auxiliary control devices of the vehicle are preferably programmed to be made in such a way that after an action of operating a given auxiliary control device, the actuator/actuators will immediately return to their basic position. In this way, they will not prevent the normal manual use of said auxiliary control device or the operation of other systems having an effect on the control device. For example, when the actuator according to the invention turns on the flashing traffic indicator of the vehicle with the lever switch, the actuator will, having made said turning movement, return to its basic position, in which the lever switch is not subjected to a mechanical force. Now, when the steering wheel is turned, the automatic return of the flashing traffic indicator of the vehicle can function normally to return the lever switch to its centre position, or correspondingly, the driver may, if he/she so wishes, do this in the normal way by turning the lever switch manually.

In the invention, the electric actuators used to manipulate the operating switches of the auxiliary control devices of the vehicle are position-controlled electrical servo units. The control unit (units) used is preferably a programmable microcontroller or the like, which control unit (units) is arranged in a wired or wireless data transmission connection with the control means.

The control means intended to be used by the driver are preferably press-button or rocker switches or the like, which are placed in an ergonomic way for example in the handle of the manual control device and/or on the rim of the steering wheel of the vehicle in a place where they are well within reach for the driver so that the driver can use the control means without loosening his/her grip on the handle of the manual control device or on the steering wheel,

In the following, we shall briefly discuss the most significant benefits to be achieved with the invention in relation to the prior art.

The invention is based on the idea of controlling the functions of the vehicle expressly by moving mechanically the original auxiliary control devices of the vehicle and their switch levers; consequently, the solution of the invention does not require that any electrical control couplings are made in the electrical system of the vehicle itself.

Irrespective of the make or model of the vehicles, the structure and operation of auxiliary control devices, particularly lever switches, is relatively similar also in vehicles made by different manufacturers. Naturally, this practice is expedient and contributes to safety in traffic, because the driver does not always need to learn to use the auxiliary control devices when driving different vehicles. For this reason, the apparatus according to the invention is also easy to install in vehicles of different models and different makes. The necessary fitting can be easily implemented either by adjustments in the mechanism of the apparatus according to the invention, or by programming the control unit/units, as will be discussed in more detail hereinbelow. Moreover, the apparatus according to the invention can be made very compact, wherein it can be easily fixed in and removed from the vehicle without leaving marks, or, if necessary, it can also be easily transferred from one vehicle to another.

Furthermore, the solution according to the invention does not in any way affect the original functional logics of the auxiliary control devices of the vehicle. For example, the original, automatic return of the flashing traffic indicator of the vehicle when the steering wheel is turned backwards after the turning will function in the original way also during the use of the apparatus according to the invention. Also, the driver will always have the possibility to use the auxiliary control devices of the vehicle normally by hand, if he/she so wishes. This makes it possible that a car equipped for a person with restricted mobility can also be driven by a person with normal capacity without the driving being substantially disturbed by the apparatus according to the invention, installed in the vehicle.

In a crash situation, the apparatus according to the invention does not increase the driver's risk of injury, because it does not comprise any bars, stiff lever systems or other similar structures installed in front of the driver. Furthermore, the apparatus according to the invention does not affect the functioning of the safety mechanisms of the vehicle itself, and it allows, for example, the steering column to collapse in a crash situation in a way designed by the automobile manufacturer. Also, the use of the apparatus according to the invention, or its installation in the automobile, does not disturb the functioning of air bags or other similar safety devices of the automobile itself.

In a summary, thanks to the invention, particularly the intelligence related to the control of the control means, the use of the auxiliary control devices of the vehicle can be made as easy, natural and safe as possible for the driver with restricted mobility in different driving situations.

The following more detailed description of the invention will further illustrate for anyone skilled in the art various possible embodiments of the invention as well as advantages to be achieved with the invention in relation to prior art.

In the following, the invention will be described in more detail with reference to the appended drawings, in which
- Fig. 1: shows, in principle, an embodiment of the apparatus according to the invention, installed to actuate a lever switches in connection with the steering wheel,
- Figs. 2a-2c and 3a-3b: show, in principle, an actuator according to the invention, implemented in connection with a lever switch, in different steps of its operation,
- Fig. 4: shows, in an explosion view in principle, the most important components of an actuator according to the invention,
- Figs. 5a and 5b: show another actuator, not part of the invention installed at the end of a lever switch, and
- Fig. 6: shows, in a principle block chart, one way of controlling the actuators according to the invention.

It should be noted that the different embodiments of the invention to be discussed hereinbelow are only intended to illustrate the nature of the invention and they must thus not be interpreted as the only possible embodiments of the invention. The advantage of the embodiments presented as examples herein is primarily their simple mechanical structure which makes it possible to make actuators of light weight and compact size at low manufacturing costs. Using a minimum number of separate components moving in relation to each other, the aim is also to keep the mechanical clearances within the structures small, which makes the exact and quiet operation of the devices possible.

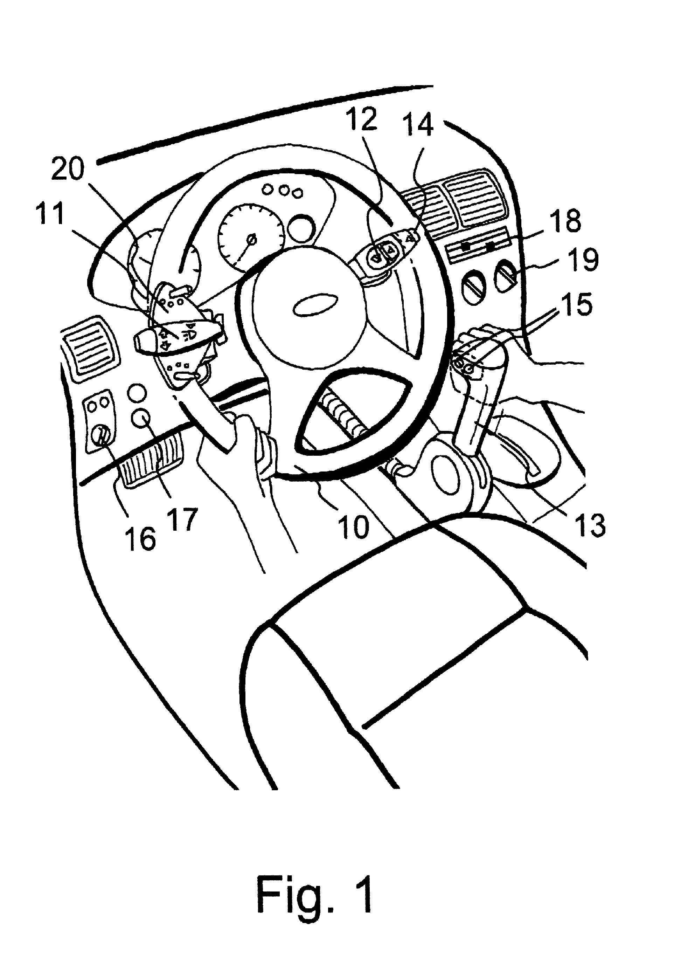

Figure 1 is a principle view showing an embodiment of the apparatus according to the invention, installed to manipulate a lever switches 11, in connection with a steering wheel 10. The lever switches 11, 12 are placed in the normal way underneath the rim of the steering wheel 10, seen from the driver, although in Fig. 1 they are, for clarity, made completely visible by representing suitable parts of the structures of the steering wheel 10 as being transparent. Figure 1 also shows a manual control device by which a vehicle equipped with automatic transmission can also be driven by a person with restricted mobility of the lower limbs. The manual control device is preferably a device according to previous Finnish patent application No. 20001987 and/or No. 20010443 by the same applicant, wherein the driver can use a handle 13 to control the brake and gas pedals of the vehicle by one hand. In this case, thanks to the hydrostatic transmission of the manual control device, the handle 13 can also be freely placed in a desired manner within reach for the driver, to achieve the best possible ergonomics. By pushing the handle 13 forward in the longitudinal direction of the vehicle, the brake pedal of the vehicle is actuated, and by pulling the handle backward, the accelerator pedal is pressed accordingly.

In the vehicle shown in Fig. 1, the left lever switch 11 is, according to a commonly prevailing practice, provided with the control of the flashing traffic indicators as well as the switch for the dipped and high-beam headlights of the vehicle. When the lever switch 11 is turned to the right and to the left in the direction of the rim of the steering wheel, the right and the left flashing traffic indicators are turned on, respectively. When the lever switch is in the centre position between these positions, the flashing traffic indicators are not in operation, and the lever switch returns to this centre position automatically when the steering wheel 10 is returned, as is commonly known. The mechanism to automatically return these flashing traffic indicators is normally implemented in the structures of the lever switch, the steering column and the shaft of the steering wheel contained in the steering column. The switch between the dipped and high-beam headlights is made by pulling the lever switch 11 towards the rim of the steering wheel by a movement substantially in the direction of the steering shaft. In the example of Fig. 1, the headlights are always switched from the dipped headlights to the high-beam headlights or *vice versa* by pulling the lever switch 11 in the above-described manner towards the rim of the steering wheel. This function will be referred to with the term "light switch" below in the text.

In the case of Fig. 1, the right lever switch 12 is provided with the operating switches controlling the operation of the windscreen wipers/washer of the vehicle. By turning the lever switch 12 to the right and/or to the left in the direction of the rim of the steering wheel 10, different wiping speeds can be selected for the windscreen wipers, and the washer function can be operated by pressing a push button 14 at the tip of the lever switch 12 in the direction of the arm of the lever switch 12. At present, the washer function is typically implemented in many vehicles in such a way that when the push button 14 is pressed down, washing liquid is sprayed onto the windscreen and at the same time, the wipers automatically wipe a few times to dry the screen. In addition to the windscreen wipers and the washer, the lever switch 12 may arranged, in a known way, to control the wipers/washers of the rear window and/or the headlights as well.

According to the invention, the lever switches 11 is equipped with an electric actuators 20 whose operation is controlled by the driver with control means 15 placed in the handle 13 of the manual control device, in this case with push-button and rocker switches. Thanks to the invention, the driver can thus use the switches 15 to exert operating movements of the actuators 20 to manipulate the original lever switches 11 of the vehicle, without losing his/her grip on the steering wheel 10 and/or the handle 13.

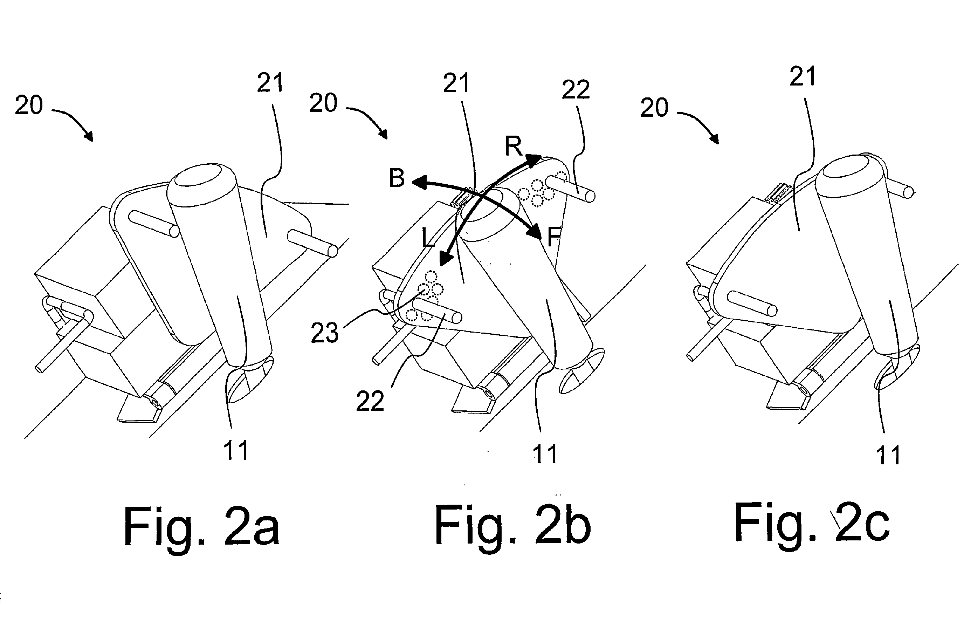

Figures 2a-2c, 3a-3b and 4 show, in more detail, the structure and operation of an advantageous embodiment of the actuator 20 implemented in connection with the left lever switch 11 of the vehicle shown in Fig. 1,

The actual mechanical manipulating movement is transmitted to the lever switch 11 by a lever means 21 included in the actuator 20. As shown in Fig. 2b, when in the basic position, the lever means 21 does not prevent the normal use of the lever switch, but the lever switch 11 can, when desired, be turned manually to the right R or to the left L to manipulate the flashing traffic indicators, as well as in the direction F to manipulate the light switch. When the driver manipulates the switches 15 to give a control command, for example to switch on the flashing traffic indicators for turning to the right, the lever means 21 moves the lever switch 11 mechanically in the direction R as shown in Fig. 2a. The lever switch 11 thus remains in the position shown in Fig. 2a, thanks to the locking function included in the lever switch itself, whereas the lever means 21 immediately returns to its basic position shown in Fig. 2b. Now, the lever switch 11 can return to its centre position (wherein the flashing traffic indicator function stops) by any of the following ways. Firstly, the lever switch 11 may be returned to its centre position by the automatic return mechanism of the vehicle itself, arranged in connection with the steering column/shaft, when the driver turns the steering wheel 10 back to the left after the turn. If the driver so wishes, he/she may also return the lever switch 11 to the centre position in the normal way by hand, or he/she may use the switches 15 to control the lever means 21 to make a movement shown in Fig. 2c to return the lever switch 11 to its centre position and further to return the lever means back to its basic position shown in Fig. 2b.

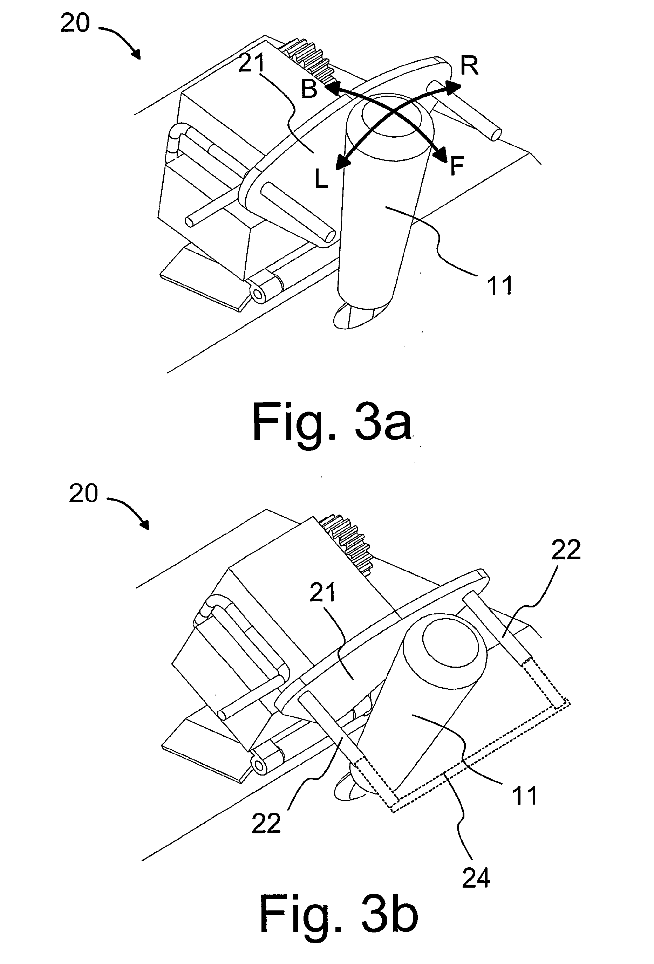

Figures 3a and 3b show the operation of the actuator 20 when it effects a mechanical manipulating movement of the lever switch 11 to use the light switch. The basic position of the lever means 21, shown in Fig. 3a, corresponds to the position shown in Fig. 2b. To switch the headlights from the dipped beam to the high beam, or *vice versa*, the driver gives a control command through the switches 15, whereby the lever means 21 moves the lever switch 11 momentarily in the direction F to manipulate the light switch. After this, the lever means 21 will immediately return to its basic position shown in Fig. 3a. Thus, the manipulating movement implemented by the actuator 21 corresponds to the manual "pulling" of the lever switch 11 by the driver to use the light switch.

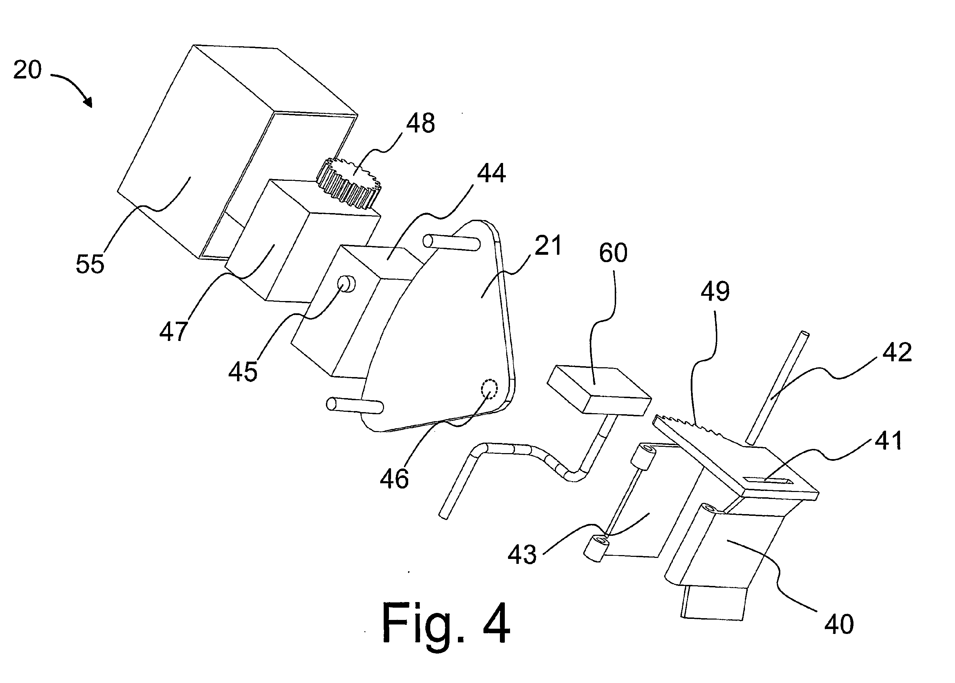

Figure 4 shows, in more detail, an advantageous structure of the actuator 20 shown in Figs. 2a-2c and 3a-3b. The actuator 20 comprises a fastening part 40 which can be fixed to the steering column and in the vicinity of the lever switch by means of a strap, or the like, extending through an opening 41 and further around the steering column. If necessary, a rubber or adhesive material can also be used on the surface of the fixing part 40 facing the steering column to secure that the actuator 20 remains in its position. Furthermore, the fixing part 40 is connected to a frame part 43 which is arranged to swivel in relation to the fixing part by means of a shaft 42 and on which the other components of the actuator 20 are fixed. The first item fixed on the frame part is a first servomotor 44, to whose output shaft 45 a lever means 21 is connected at a turning point 46 indicated by a broken line in Fig. 4. Thus, the first servomotor 44 makes it possible to turn the lever means 21 in relation to the turning point 46 in the directions L-R shown in Figs. 2a-2c. On top of the first servomotor 44, in turn, a second servomotor 47 is fixed, a cogged wheel 48 being connected to its output shaft. The cogged wheel 48 is arranged to match a toothed rim 49 machined in the fixing part 40, wherein the second servomotor 47 makes it possible to turn the lever means 21 in relation to the shaft 42 in the directions B-F as shown in Figs- 3a-3c. Furthermore, the actuator 20 preferably comprises a control unit 60 which is arranged to control the servomotors 44, 47 by means of control signals from the control means 15, to achieve the desired manipulating movement of the lever means 21. A housing 55 is preferably provided to cover suitable parts of the components of the actuator 20, to achieve a compact unit with a finished appearance.

The materials used for the fixing part 40, the frame part 43, the lever means 21, and the housing 61 can be, for example, metal or plastic with suitable coatings. Said parts can be made of, for example, light and strong aluminum.

The servomotors 44, 47 are preferably servomotors which are used in scale models or the like and which are made, for example, by Hitec RCD Inc., Poway, California. One servomotor model by said manufacturer, suitable for this purpose, is for example Hitec HS-645MG. The advantage of servomotors intended for scale model use is their compact size, light weight and the torque which is high in relation to the physical size of the servomotor and which can be achieved by means of a reduction gear integrated in the servomotor itself. Furthermore, scale model servomotors also include a position transmitter which is needed for the use according to the invention, as well as the power electronics needed for using the electric motor itself. Servomotors are controlled by using a control method known as such and based on the impulse ratio, wherein the servomotor gravitates to the position determined by the impulse ratio input as a control signal, on the basis of its internal position transmitter. As this control method is standardized for scale model servomotors, servomotors by different manufacturers are also largely interchangeable, wherein it is possible to select for each purpose the servomotor which has the most suitable size and torque.

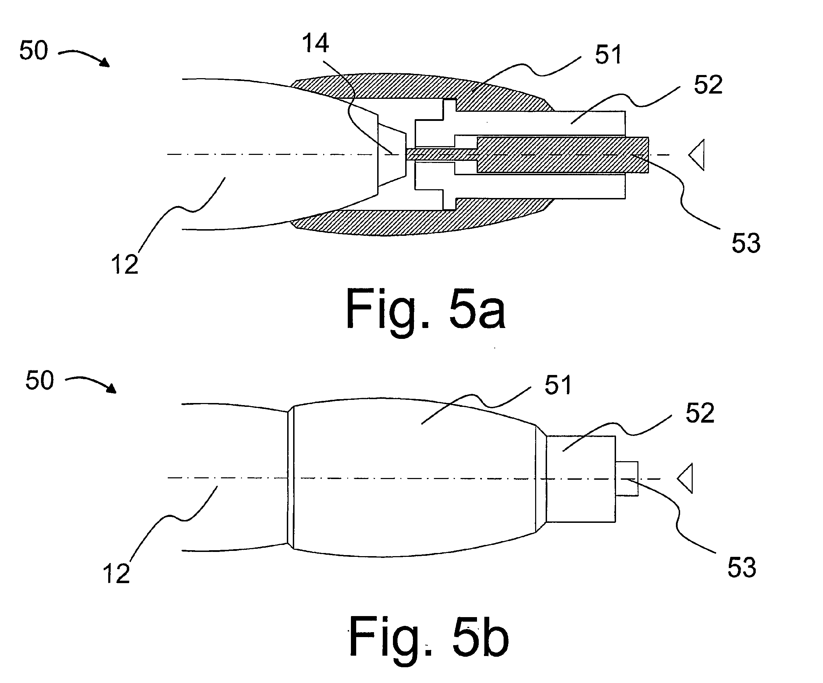

Figures 5a and 5b show, in more detail, the structure and operation of an actuator 50 based on an electric solenoid and implemented in connection with the right lever switch 12 in the vehicle of Fig. 1.

Figure 5a shows a cross-sectional view and Fig. 5b shows a side view of the actuator 50 which makes it possible to use the push button 14. The actuator 50 comprises a frame part 51 to be fixed at the end of the lever switch 12, a coil frame 52 connected to the frame part, as well as a pin 53, which last-mentioned two parts together comprise an electrically operated solenoid.

Naturally, a solenoid actuator with the operating principle shown in Figs. 5a and 5b can also be arranged to manipulate the panel switches of the vehicle in a corresponding manner. Some of such panel switches are indicated with the references 16 and 17 in Fig. 1. In a corresponding manner, the actuator, based on one or more servomotors and/or linear servomotors, can be arranged to manipulate the panel switches of the vehicle. In Fig. 1, such panel switches include the adjusting lever 18 and the rotatable adjusting knob 19.

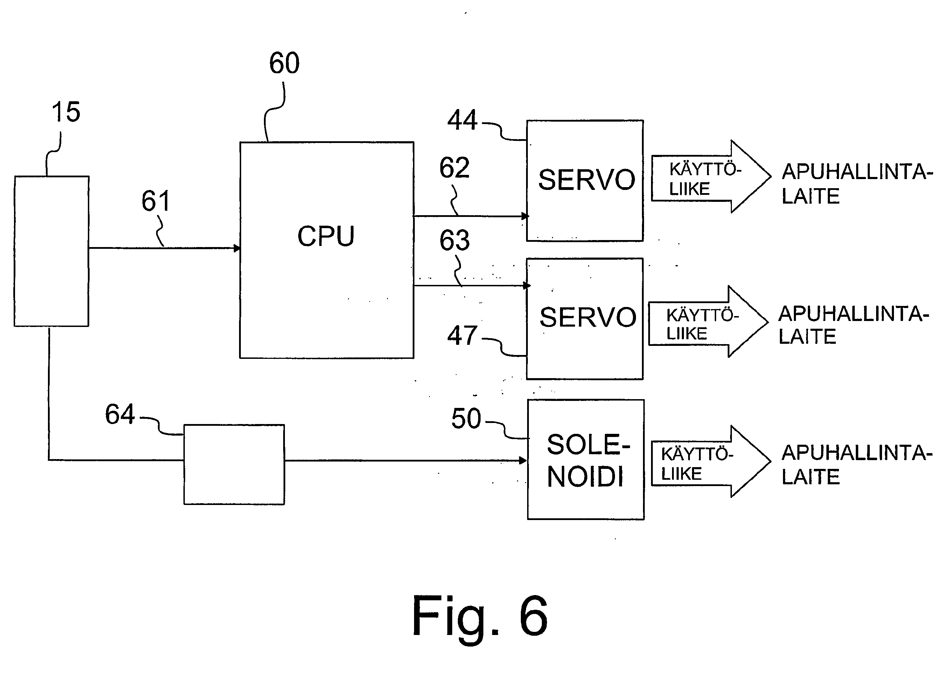

Figure 6 illustrates, in a block chart, a method for the control of the actuators 20.

The control means 15, for example rocker or push-button switches placed in the handle 13 of the manual control device, are arranged in a wired or wireless data transmission connection with the control unit 60. The memory of the control unit 60 comprises pre-programmed data about the kind of the series of movements by one or more servomotors 44, 47 which corresponds to a given command by the control means 15. By means of the program stored in its memory, the control unit 60 further generates signals 62, 63 to guide the servomotors 44, 47 to the desired position. As the servomotors 44, 47 are preferably so-called scale model servomotors as mentioned above, the control signals 62, 63 are signals consisting of rectangular pulses in which the pulse ratio indicates the desired position of the servomotor, and in which position the servomotor is turned by means of its internal position transmitter and the integrated control and power electronics.

The control unit 60 used is preferably a programmable microcontroller or the like, which contains a non-volatile memory for storing the program, and a microprosessor to run the program under control by control signals 61 from the control means 15 coupled to the input connections of said microcontroller. The programming or software modifications in the microcontroller are performed, for example, by placing the respective integrated circuit in a separate programming device provided for this purpose, for example a programming device connected to a personal computer. Alternatively, for the programming, the microcontroller can also be coupled to the programming device in another way known from prior art, for example by using a cable.

Preferably, the operation of the control unit 60 is arranged in such a way that control pulses are transmitted to the servomotors 44, 47 only when the actuator 20 is moving, to avoid unnecessary heating and power consumption of the servomotors. Further, the operating voltage for the whole apparatus according to the invention is preferably arranged in such a way that the operating voltage is coupled to the apparatus only when the electrics of the vehicle are turned on from the ignition key or the like.

Further, Fig. 6 also shows a method for controlling the solenoid actuator 50. The solenoid 50 is preferably controlled by transmitting a control signal from a push button or a corresponding control means 15 to a coupling component 64, such as a power transistor, a relay, or the like, which coupling component 64 couples the actual operating current to the solenoid 50. In this way, only a control current needs to be coupled through the push button or the like used as the control means 15 operated by the driver, wherein said means can be a suitable compact component. The solenoid 50 will "pull" as long as the driver presses the push button, or the like, used as the control means 15.

The control unit 60 is preferably placed in connection with an actuator 20 consisting of servomotors 44, 47, as shown in Fig. 4. The switching component 64 needed to control the solenoid 50 is preferably placed, for example, inside the handle 13 of the manual control device, to provide a compact apparatus.

In the following, we shall further illustrate the operation of the apparatus according to the invention by means of examples describing some use situations. In the examples, the apparatus substantially complies with that shown in Fig. 1.

The flashing traffic indicators of the vehicle are preferably arranged to be controlled by means of a rocker switch 15 placed in the handle 13 of the manual control device and used, for example, by means of the index and middle fingers. The rocker switch 15 has three positions, and it is returned by means of a spring to its neutral centre position when the switch is not pressed. When the driver presses the rocker switch "to the right" by means of a medium-length pressing with a duration of, for example, from 0.3 to 0.8 s, the actuator 20 will turn the lever switch 11 in the direction R in such a way that the right flashing traffic indicators of the vehicle are turned on (Fig. 2a). The lever switch 11 remains in its position corresponding to this mode, whereas the actuator 20 returns immediately to its basic position (Fig. 2b). Now, the lever switch 11 may return to its centre position, for example, by means of the return mechanism of the vehicle itself, when the driver turns the steering wheel back to the left.

When the driver presses the rocker switch "to the right" by means of a long pressing with a duration of for example > 0.8 s, the actuator 20 will first turn the lever switch 11 in such a way that the right flashing traffic indicators of the vehicle are turned on (Fig. 2a). After this, the actuator will first return immediately to its basic position and after a pre-programmed delay time the actuator 20 will still make a short return movement in the opposite direction (2c), returning the lever switch 11 back to its centre position. A suitable delay time may be, for example, 6 s. This function is useful when one wishes to make a short-time flashing traffic indication, for example when starting or ending a passing situation, in a situation in which the steering wheel is turned to change the traffic lane just so little that the automatic return mechanism of the lever switch 11 of the vehicle itself will not be activated.

In a situation in which the lever switch 11 is turned "to the right" and the driver presses the rocker switch briefly in the opposite direction by pressing "to the left" for a time of for example < 0.3 s, the actuator 20 will make a movement which returns the lever switch 11 to its centre position. This function can be used to turn off the flashing traffic indicator after it has first been turned on by means of, for example, said medium-length (0.3 to 0.8 s) pressing or otherwise.

Furthermore, the following example is intended to describe particularly how the apparatus according to the invention improves traffic safety in practice when the vehicle is driven by means of the manual control device.

As shown in Fig. 1, the driver controls the accelerator and the brakes of the vehicle with his/her right hand on the handle 13 of the manual control device and steers the vehicle with his/her left hand on the steering wheel 10, and can perform a passing at dark and under poor road conditions in the following way. At first, by a long (> 0.8 s) pressing of the rocker switch placed in the handle 13, the driver controls the flashing traffic light to the left for a moment (delay time 6 s) and simultaneously accelerates by pulling the handle 13 backwards and further, substantially simultaneously, turns the steering wheel 10 to change the lane for passing. Now, the driver can fully concentrate on controlling the direction and the speed of the car, as the actuator 20 will return the lever switch 11 of the flashing traffic indicators to the centre position automatically after a given delay time. When reaching the side of the vehicle to be passed, the driver can, at any moment of time and completely irrespective of the mode of the flashing traffic indicators (and irrespective of the position of the actuator 20 in the directions R-L in Figs. 2a-2c), press the push button in the handle 13 to switch the headlights to the high beam. Thus, the actuator 20 will make the manipulating movement of the lever switch 11 in the direction B-F (Figs. 3a-3b) to use the light switch. To end the passing, the driver switches on the right flashing traffic indicator by a long (> 0.8 s) pressing of the rocker switch in the handle 13 and turns the steering wheel to change the lane, simultaneously decelerating the speed to a suitable level by using the handle 13. After the 6 s delay time, the actuator 20 will return the lever switch of the flashing traffic indicators automatically to its centre position.

The effect of the invention to improve safety in traffic can be seen in that during the whole passing situation described above, the driver can keep his/her one hand steadily on the steering wheel and the other hand (when so desired) continuously on the handle 13 of the manual control device.

It should be noted that the above-presented time limits for short (< 0.3 s), medium-length (0.3 to 0.8 s) and long (> 0.8 s) pressings as well as the delay time (6 s) of the flashing traffic indicator are only some examples which have been presented to illustrate different functions of the invention. Naturally, these time limits and the delay time may also be freely selected to differ from said values, by suitable programming of the control unit 60.

The actuator 20 implemented with servomotors can also be installed in the right lever switch 12 of the vehicle, for example to control the operation of the front and rear screen wipers in a more versatile manner than described above.

In some situations, linear servomotors can also be used instead of servomotors which produce a rotating movement.

If the light switch of the vehicle is of the type with two different positions of the lever switch 11 in the direction of the steering column (direction B-F), in which the lever switch 11 can be placed to switch the dipped and main beam headlights, the lever means 21 can be provided with a clamp means 24 or a corresponding stopper shown in Fig. 3b, wherein thanks to the clamp means 24, the lever means 21 can also actively turn the lever switch 11 in the direction B. According to the character of the invention, after making the manipulating movement of the lever switch 11 to move it to a desired position in the direction B-F, the actuator 20 immediately returns to its basic position, wherein the lever switch 11 can, if necessary, be also turned manually from one position to another in the direction B-F. Consequently, the space between the lever means 21 and the clamp means 24 is arranged to be such that in a certain position of the lever means 21 in the direction B-F, the lever switch 11 can be moved by hand from one position to another in said direction. Completely irrespective of the position of the lever switch in said direction B-F, the actuator 20 can actuate the flashing traffic indicator by movements in the direction L-R, or the lever switch 11 can also be turned manually in the direction L-R within a range limited by guide means 22.

The apparatus according to the invention can be fitted in various vehicles and for various auxiliary control devices by programming and/or mechanically. In the actuator 20, the largest possible paths of the lever means 21 in the directions L-R and B-F are preferably arranged, for example in connection with the design of the mechanism of said actuator, to be such that they cover the movements required for manipulating the lever switches used in the most common vehicle makes or models. Thus, the paths of the actuator 20 can be easily fitted to match with different vehicles, for example, simply by modifying the software of the control unit 60. The vehicle-specific adjustment of the paths can also be made mechanically so that, for example, the point of attachment of the guide means 22 in the lever means 21 is changed according to the need. Figure 2b shows several different fixing points 23 (fixing holes) for the guide means 22 in the lever means 21. Thus, the suitable fixing point can be selected for the guide means 22 according to the length of the manipulating movement on the lever switch 11 in the direction L-R and, for example, the length and the thickness of the lever switch 11 itself.

It is easy to connect the necessary number of suitable types of actuators 20, 50 to the control unit/units 60, and separately for each actuator, it is possible to program a function to be implemented by said actuator as a response to commands given by the control means 15. The control means 15 may comprise one or more lever switches, press-button switches, or the like. It is obvious that in addition to various hand-operated switches, also other kinds of control means can be used as the control means 15. A driver with restricted mobility, for example with fingers missing or with a restricted capacity to move the fingers, may use, as the control means 15, for example technology known as such from prior art, whereby the driver can give various control commands by blowing/sucking in a thin tube placed in the mouth. Also various systems controlled by speech commands are feasible. In certain situations, the control means 15 can also be arranged to be used by feet or by other body parts of the driver, depending on his/her capacity.

When the control means 15 used consist of various switches placed in the handle of a manual control device, the handle can naturally be placed to be operated by either the right or the left hand of the driver. Particularly when applying a manual control device based on hydrostatic transmission, as described in the previous Finnish patent applications No. 20001987 and No. 20010443 by the same applicant, the handle of the manual control device can be freely placed in a position most suitable for the driver in view of ergonomics. The handle can thus be fixed, for example, in a wheelchair used as the driver's seat.

Naturally, the invention can also be used in a case in which the driver can apply the brakes and the accelerator of the vehicle in the normal way by feet, but he/she has only one hand available for steering the vehicle. Thus, the control means 15 can be placed, for example, in a control knob fixed on the rim of the steering wheel and arranged to be rotatable around its own shaft of attachment. When holding said control knob, the driver can, by one hand, rotate the steering wheel and operate the auxiliary control devices of the vehicle by applying control means 15 in the control knob. In this situation, the data transmission between the control means 15 and the control unit/units 60 is preferably arranged by wireless communication.

It will, of course, be obvious for anyone skilled in the art that by combining, in different ways, the above-presented principles in connection with different embodiments of the invention, it is possible to provide various embodiments of the invention. Therefore, the above-presented examples must not be interpreted as restrictive to the invention, but the embodiments of the invention are varied within the scope of the the claims.

## Claims

1. An apparatus for using at least one auxiliary control device of a vehicle, which auxiliary control device refers to an original lever switch (11) placed in connection with a steering wheel (10) of the vehicle, the apparatus comprising:
- at least one electrical actuator (20) arranged to produce mechanical manipulating movements of the original lever switch (11) of the vehicle, the manipulating movements corresponding to normal manual manipulating movements of the original lever switch, and
- at least one control means (15) for the driver to control the manipulating movements of said electrical actuator (20), wherein the driver of the vehicle can, by means of the apparatus, operate the original lever switch,
**characterized in that** said electrical actuator (20) further comprises:
- a first electrical servomotor (44) to produce the mechanical manipulating movements of the original lever switch (11) in a first direction (L, R) of the original lever switch (11), and
- a second electrical servomotor (47) to produce the corresponding mechanical manipulating movements of the original lever switch (11) in a second direction (B, F) of the original lever switch (11).

2. The apparatus according to claim 1, **characterized in that** the apparatus also comprises at least one control unit (60) arranged to receive a control signal (61) from the control means (15), and further as a response to said control signal (61), to control the operation of the electrical actuator (20) in a predetermined manner.

3. The apparatus according to claim 2, **characterized in that** the control unit (60) is a programmable microcontroller arranged in a wired or wireless data transmission connection with the control means (15) for the transmission of the control signal (61) from the control means (15) to the control unit (60).

4. The apparatus according to claim 3, **characterized in that** the control unit (60) is programmed in response to certain commands obtained as a control signal (61) from the control means (15), to control the electrical actuator (20) to implement a predetermined series of movements to manipulate the original lever switch (11) of the vehicle.

5. The apparatus according to any of the preceding claims, **characterized in that** the electrical actuator (20) which exerts the operating movement on the original lever switch (11), comprises an electrical servomotor implementing one or more rotating movements or an electrical servomotor implementing a linear movement, or both.

6. The apparatus according to any of the preceding claims, **characterized in that** the apparatus further comprises an electrical actuator (50) arranged to press a push button (14) placed at the tip of the original lever switch (11).

7. The apparatus according to claim 1, **characterized in that** the electrical actuator (20) is arranged to be fixed in connection with the original lever switch, to a steering column supporting the steering wheel (10) of the vehicle.

8. The apparatus according to claim 6, **characterized in that** the electrical actuator (50) comprises one or more electrical solenoids.

9. The apparatus according to any of the claims 2 to 4, **characterized in that** the control means (15) for the driver is a hand-operated rocker switch or a press-button switch.

10. The apparatus according to claim 9, **characterized in that** the control unit (60) is arranged to detect the duration of the pressing of the control means (15) and, as a response to pressings of different durations, to control the electrical actuator (20) to implement a predetermined series of movements.

11. The apparatus according to any of the preceding claims, **characterized in that** the original lever switch is an operating switch for flashing traffic indicators (11), or a light switch for dipped or high-beam headlights (11), or a operating switch (14) for the windscreen wiper/washer.

12. The apparatus according to any of the preceding claims, **characterized in that** the control means (15) is placed in a handle (13) of a manual control device which is used to control an accelerator and/or a brake of the vehicle.

13. The apparatus according to any of the preceding claims, **characterized in that** the control means (15) for the driver is placed in the steering wheel (10) of the vehicle, a means fixed to the steering wheel, or in the vicinity of the steering wheel.

## Patentansprüche

1. Vorrichtung für die Bedienung von zumindest einer Hilfssteuereinrichtung eines Fahrzeugs, wobei sich die Hilfssteuereinrichtung auf einen ursprünglichen Hebelschalter (11), der in Verbindung mit einem Lenkrad (10) des Fahrzeugs angeordnet ist, bezieht, und die Vorrichtung:
- zumindest einen elektrischen Mitnehmer (20), der angeordnet ist, um mechanische Manipulationsbewegungen des ursprünglichen Hebelschalters (11) des Fahrzeugs zu bewirken, wobei die Manipulationsbewegungen normalen manuellen Manipulationsbewegungen des ursprünglichen Hebelschalters entsprechen, und
- zumindest ein Steuermittel (15) für den Fahrer zur Steuerung der Manipulationsbewegungen des elektrischen Mitnehmers (20), wobei der Fahrer des Fahrzeugs mittels der Vorrichtung den ursprünglichen Hebelschalter bedienen kann, umfasst,
**dadurch gekennzeichnet, dass** der elektrische Mitnehmer (20) ferner:
- einen ersten elektrischen Servomotor (44) zum Bewirken der mechanischen Manipulationsbewegungen des ursprünglichen Hebelschalters (11) in einer ersten Richtung (L, R) des ursprünglichen Hebelschalters (11), und
- einen zweiten elektrischen Servomotor (47) zum Bewirken der entsprechenden mechanischen Manipulationsbewegungen des ursprünglichen Hebelschalters (11) in einer zweiten Richtung (B, F) des ursprünglichen Hebelschalters (11) umfasst.

2. Vorrichtung nach Anspruch 1, **dadurch gekennzeichnet, dass** die Vorrichtung auch zumindest eine Steuereinheit (60) umfasst, die angeordnet ist, um ein Steuersignal (61) vom Steuermittel (15) zu empfangen, und um ferner, als Antwort auf das Steuersignal (61) den Betrieb des elektrischen Mitnehmers (20) in einer vorherbestimmten Weise zu steuern.

3. Vorrichtung nach Anspruch 2, **dadurch gekennzeichnet, dass** die Steuereinheit (60) ein programmierbarer Mikrocontroller ist, der in einer verkabelten oder kabellosen Datenübertragungsverbindung mit dem Steuermittel (15) für die Übertragung des Steuersignals (61) vom Steuermittel (15) zur Kontrolleinheit (60) angeordnet ist.

4. Vorrichtung nach Anspruch 3, **dadurch gekennzeichnet, dass** die Steuereinheit (60) als Antwort auf bestimmte vom Steuermittel (15) als ein Steuersignal (61) erhaltene Befehle programmiert ist, um den elektrischen Mitnehmer (20) zu steuern, um eine vorherbestimmte Serie von Bewegungen zur Manipulation des ursprünglichen Hebelschalters (11) des Fahrzeugs auszuführen.

5. Vorrichtung nach irgendeinem der vorhergehenden Ansprüche, **dadurch gekennzeichnet, dass** der elektrische Mitnehmer (20), welcher die Bedienbewegungen an dem ursprünglichen Hebelschalter (11) ausübt, einen elektrischen Servomotor, der eine oder mehrere Drehbewegungen ausführt oder einen elektrischen Servomotor, der eine lineare Bewegung ausführt, oder beide umfasst.

6. Vorrichtung nach irgendeinem der vorhergehenden Ansprüche, **dadurch gekennzeichnet, dass** die Vorrichtung ferner einen elektrischen Mitnehmer (50), der angeordnet ist, um einen an der Spitze des ursprünglichen Hebelschalter (11) platzierten Druckknopf (14) zu drücken, umfasst.

7. Vorrichtung nach Anspruch 1, **dadurch gekennzeichnet, dass** der elektrische Mitnehmer (20) angeordnet ist, um in Verbindung mit dem ursprünglichen Hebelschalter an eine Lenksäule, die das Lenkrad (10) des Fahrzeugs trägt, fixiert zu sein.

8. Vorrichtung nach Anspruch 6, **dadurch gekennzeichnet, dass** der elektrische Mitnehmer (50) eine oder mehrere elektrische Spulen umfasst.

9. Vorrichtung nach irgendeinem der Ansprüche 2 bis 4, **dadurch gekennzeichnet, dass** das Steuermittel (15) für den Fahrer ein handbedienbarer Wippschalter oder ein Druckknopfschalter ist.

10. Vorrichtung nach Anspruch 9, **dadurch gekennzeichnet, dass** die Steuereinheit (60) angeordnet ist, um die Dauer des Drückens des Steuermittels (15) zu detektieren, und um als Antwort des Drückens mit unterschiedlicher Dauer den elektrischen Mitnehmer (20) zu steuern, um eine vorherbestimmte Serie von Bewegungen auszuführen.

11. Vorrichtung nach irgendeinem der vorhergehenden Ansprüche, **dadurch gekennzeichnet, dass** der ursprüngliche Hebelschalter ein Bedienschalter für blinkende Fahrtrichtungsanzeiger (11) oder ein Lichtschalter für Abblend- oder Aufblendfrontlichter (11) oder ein Bedienschalter (14) für den Scheibenwischer/die Waschanlage ist.

12. Vorrichtung nach irgendeinem der vorhergehenden Ansprüche, **dadurch gekennzeichnet, dass** das Steuermittel (15) in einem Griff (13) einer manuellen Steuervorrichtung, die verwendet wird, um einen Beschleuniger und/oder eine Bremse des Fahrzeugs zu steuern, platziert ist.

13. Vorrichtung nach irgendeinem der vorhergehenden Ansprüche, **dadurch gekennzeichnet, dass** das Steuermittel (15) für den Fahrer im Lenkrad (10) des Fahrzeugs platziert ist, ein am Lenkrad fixiertes Mittel ist oder ein in der Umgebung des Lenkrades fixiertes Mittel ist.

## Revendications

1. Appareil destiné à utiliser au moins un dispositif de commande auxiliaire d'un véhicule, lequel dispositif de commande auxiliaire se réfère à un interrupteur à levier d'origine (11) placé en liaison avec un volant de direction (10) du véhicule, l'appareil comprenant :
- au moins un actionneur électrique (20) agencé de façon à produire des mouvements de manoeuvre mécanique de l'interrupteur à levier d'origine (11) du véhicule, les mouvements de manoeuvre correspondant aux mouvements de manoeuvre manuelle normale de l'interrupteur à levier d'origine, et
- au moins un moyen de commande (15) pour que le conducteur commande les mouvements de manoeuvre dudit actionneur électrique (20), dans lequel le conducteur du véhicule peut, au moyen de l'appareil, faire fonctionner l'interrupteur à levier d'origine,
**caractérisé en ce que** ledit actionneur électrique (20) comprend en outre :
- un premier servomoteur électrique (44) destiné à produire les mouvements de manoeuvre mécanique de l'interrupteur à levier d'origine (11) dans une première direction (L, R) de l'interrupteur à levier d'origine (11), et
- un second servomoteur électrique (47) destiné à produire les mouvements de manoeuvre mécanique correspondants de l'interrupteur à levier d'origine (11) dans une seconde direction (B, F) de l'interrupteur à levier d'origine (11).

2. Appareil selon la revendication 1, **caractérisé en ce que** l'appareil comprend également au moins une unité de commande (60) agencée de façon à recevoir un signal de commande (61) provenant du moyen de commande (15), et en outre en réponse audit signal de commande (61), commander le fonctionnement de l'actionneur électrique (20) d'une manière prédéterminée.

3. Appareil selon la revendication 2, **caractérisé en ce que** l'unité de commande (60) est un microcontrôleur programmable agencé dans une liaison de transmission de données filaire ou sans fil avec le moyen de commande (15) pour la transmission du signal de commande (61) du moyen de commande (15) à l'unité de commande (60).

4. Appareil selon la revendication 3, **caractérisé en ce que** l'unité de commande (60) est programmée en réponse à certains ordres obtenus comme un signal de commande (61) provenant du moyen de commande (15), pour commander l'actionneur électrique (20) afin d'exécuter une série prédéterminée de mouvements pour manipuler l'interrupteur à levier d'origine (11) du véhicule.

5. Appareil selon l'une quelconque des revendications précédentes, **caractérisé en ce que** l'actionneur électrique (20) qui exerce le mouvement de fonctionnement sur l'interrupteur à levier d'origine (11), comprend un servomoteur électrique exécutant un ou plusieurs mouvements de rotation ou un servomoteur électrique exécutant un mouvement linéaire, ou les deux.

6. Appareil selon l'une quelconque des revendications précédentes, **caractérisé en ce que** l'appareil comprend en outre un actionneur électrique (50) agencé de façon à presser un bouton poussoir (14) placé au bout de l'interrupteur à levier d'origine (11).

7. Appareil selon la revendication 1, **caractérisé en ce que** l'actionneur électrique (20) est agencé de façon à être fixé en liaison avec l'interrupteur à levier d'origine, à une colonne de direction supportant le volant de direction (10) du véhicule.

8. Appareil selon la revendication 6, **caractérisé en ce que** l'actionneur électrique (50) comprend un ou plusieurs solénoïdes électriques.

9. Appareil selon l'une quelconque des revendications 2 à 4, **caractérisé en ce que** le moyen de commande (15) pour le conducteur est un interrupteur à bascule à commande manuelle ou un interrupteur à bouton poussoir.

10. Appareil selon la revendication 9, **caractérisé en ce que** l'unité de commande (60) est agencée de façon à détecter la durée de la pression du moyen de commande (15) et, en réponse aux pressions de différentes durées, commander l'actionneur électrique (20) pour exécuter une série prédéterminée de mouvements.

11. Appareil selon l'une quelconque des revendications précédentes, **caractérisé en ce que** l'interrupteur à levier d'origine est un interrupteur de fonctionnement destiné à faire clignoter des indicateurs de direction (11), ou un interrupteur d'éclairage pour phares de croisement ou de route (11), ou un interrupteur de fonctionnement (14) pour l'essuie-glace/le lave glace.

12. Appareil selon l'une quelconque des revendications précédentes, **caractérisé en ce que** le moyen de commande (15) est placé dans un manche (13) d'un dispositif de commande manuel qui est utilisé pour commander un accélérateur et/ou un frein du véhicule.

13. Appareil selon l'une quelconque des revendications précédentes, **caractérisé en ce que** le moyen de commande (15) pour le conducteur est placé dans le volant de direction (10) du véhicule, un moyen fixé au volant de direction, ou à proximité du volant de direction.
